# DEMANDE DE BREVET EUROPEEN

(11) **EP 2 042 372 A1**
(43) Date de publication de la demande: **01.04.2009**
(21) Numéro de dépôt: 08305588.9
(22) Date de dépôt: 25.09.2008
(51) Int. Cl.: B60P 3/12

(54) **Dispositif de plateau de chargement basculant-coulissant pour vehicule de depannage**

(30) Priorité: 26.09.2007 FR 0757859
(71) Demandeur: Georges, M. Jean, F-55260 Menil aux Bois (FR)
(72) Inventeur: Georges, M. Jean, F-55260 Menil aux Bois (FR)
(74) Mandataire: Rhein, Alain

(57) **Abrégé**

Dispositif de plateau de chargement basculant-coulissant pour véhicule de dépannage du type comportant un châssis (10) équipé d'un plateau (4) apte à coulisser et à basculer pour prendre deux positions extrêmes, l'une déployée et abaissée au sol, et l'autre relevée par rapport au châssis (10) pour le transport, le plateau (4) étant monté mobile en translation longitudinale sur une rampe (3) elle-même montée pivotante sur le châssis (10).

La liaison du plateau (4) à la rampe (3) est réalisée au travers de deux galets (43) montés symétriquement sur le plateau (4) et engagés chacun dans l'un des deux longerons (30) de la rampe (3), longerons qui à cet effet consistent en des profilés présentant une gorge (31) en U ouverte vers l'extérieur.

## Description

La présente invention a pour objet un dispositif de plateau de chargement basculant-coulissant pour véhicule de dépannage, et véhicule de dépannage comportant un tel dispositif.

On connaît déjà de nombreux dispositifs de plateaux basculant-coulissant, montés sur un véhicule de dépannage comportant un châssis équipé d'un plateau apte à coulisser et à basculer pour prendre deux positions extrêmes, l'une déployée et abaissée au sol permettant de procéder au chargement d'un objet ou d'un véhicule immobilisé, et l'autre relevée par rapport audit châssis pour le transport, ledit plateau étant à cet effet monté mobile en translation longitudinale sur une rampe elle-même montée pivotante sur ledit châssis en sorte de pouvoir basculer, puis amener au sol, par coulissement, ledit plateau par son extrémité arrière.

Un tel dispositif est par exemple décrit dans le document FR 2 852 374 au nom de la Demanderesse.

Dans ce dispositif, le déplacement du plateau est obtenu sous l'effet d'un vérin double effet associé à un système de chaînes et de poulies, tandis que la liaison entre le plateau et la rampe est réalisée au travers de coulisseaux latéraux aptes à coulisser chacun sur un bord de ladite rampe, et qui portent chacun un pivot d'axe transversal auquel est relié l'extrémité avant dudit plateau. Les coulisseaux permettent d'assurer le guidage du plateau durant son glissement le long de la rampe et la liaison au travers des pivots permet, lors de l'abaissement de la partie arrière de la rampe, de réduire l'angle que fait le plateau avec le sol.

Si ce dispositif constitue un progrès par rapport aux autres dispositifs connus, notamment en ce qui concerne les moyens moteurs, il n'en présente pas moins certains inconvénients en ce qui concerne la liaison entre le plateau et la rampe.

Ainsi, les coulisseaux, outre que leur fabrication représente un coût élevé, génèrent d'importantes forces de frottement qui d'une part impliquent la nécessité d'utiliser un ou plusieurs vérins de forte puissance, ce qui augmente d'autant plus le coût de fabrication de l'ensemble, et d'autre part imposent des travaux de graissage réguliers et fastidieux sur la longueur des coulisses.

On connaît également par le document US 6 413 033 un dispositif de plateau de chargement basculant-coulissant pour véhicule de transport, qui comprend un plateau prévu apte à coulisser le long d'une rampe inclinable, jusqu'à pouvoir s'en désolidariser pour être amené au sol avec son chargement. A cet effet la rampe comporte deux longerons de section en C dans lesquels sont logés et peuvent coulisser les bords latéraux du plateau. Chacun des coins du plateau est muni d'un galet de roulement, les deux galets de l'extrémité du côté arrière sont destinés à venir au sol en premier lors du basculement, tandis que les deux galets de l'extrémité du côté avant sont destinés dans un premier temps à rouler dans les longerons de la rampe lors du coulissement du plateau, et dans un deuxième temps à venir au sol. Par ailleurs, chacun des longerons de la rampe comporte à son extrémité du côté arrière, un galet de roulement sur lequel peut rouler, lors du coulissement, le bord latéral du plateau engagé dans ledit longerons.

L'utilisation de ce dispositif présente un grand inconvénient, en effet lors de l'opération de coulissement le plateau et la rampe demeurent alignés, en sorte que le pivotement de la rampe et le coulissement du plateau ne peuvent pas être toujours réalisés de manière indépendante mais doivent être parfaitement coordonnés.

En effet, avec ce dispositif de plateau, si le déchargement débute par une phase de coulissement, le chargement peut se trouver rapidement en porte-à-faux et il convient alors de faire basculer la rampe pour amener au sol les galets de l'extrémité arrière du plateau, avec toutefois l'inconvénient de ne plus pouvoir faire coulisser le plateau, sauf à faire basculer simultanément la rampe dans le sens du repliement. Ces manoeuvres ne sont pas aisées, et excluent toute utilisation pour le déplacement de charges lourdes.

La présente invention a pour but de proposer un dispositif de plateau de chargement basculant-coulissant pour véhicule de dépannage permettant de remédier aux divers inconvénients précités.

Le dispositif de plateau de chargement basculant-coulissant pour véhicule de dépannage selon l'invention comporte un châssis équipé d'un plateau apte à coulisser et à basculer pour prendre des positions successives entre deux positions extrêmes, l'une déployée et abaissée au sol permettant de procéder au chargement d'un objet ou d'un véhicule immobilisé, et l'autre relevée par rapport audit châssis pour le transport, ledit plateau étant à cet effet monté mobile en translation longitudinale sur une rampe elle-même montée pivotante sur ledit châssis en sorte de pouvoir basculer puis amener au sol, par coulissement, l'extrémité du côté arrière dudit plateau, tandis que son extrémité du côté avant est apte à pouvoir pivoter sur ladite rampe selon un axe transversal en sorte de réduire l'angle que fait ledit plateau avec le sol, et ledit dispositif se caractérise essentiellement en ce que la rampe comprend deux longerons parallèles consistant chacun en un profilé présentant une section en U dont la gorge s'ouvre latéralement vers l'extérieur, tandis que le plateau comporte deux galets de même axe horizontal, engagés chacun dans la gorge d'un profilé, en sorte de constituer la liaison en pivotement et en coulissement dudit plateau à ladite rampe, et en ce que ledit châssis comporte à son extrémité du côté arrière, deux rouleaux disposés de part et d'autre de la rampe, sur lesquels vient en appui et peut rouler ledit plateau.

Les galets assurent la liaison en coulissement ainsi qu'en pivotement du plateau par rapport à la rampe, tandis que le plateau roule sur les rouleaux quand il coulisse le long de la rampe et que son extrémité du côté arrière ne repose pas encore sur le sol.

La conception du dispositif de plateau de chargement basculant-coulissant selon l'invention présente de nombreux avantages. Outre la réduction du coût de fabrication du plateau lui-même et de la rampe, on observe une optimisation du coulissement du plateau sur la rampe, avec pour conséquence une réduction de la force nécessaire au déplacement dudit plateau, qui permet d'utiliser un vérin de dimension réduite donc moins onéreux, et également moins lourd, ce qui autorise des économies en énergie.

De plus, il n'est pas nécessaire de parfaitement coordonner le coulissement du plateau sur la rampe et le basculement de cette dernière.

Selon une caractéristique additionnelle du dispositif de plateau de chargement basculant-coulissant selon l'invention, les longerons présentent chacun du côté intérieur une gorge conçue apte à l'assujettissement de traverses, consistant notamment en des supports des moyens moteurs du mouvement de coulissement.

Selon une autre caractéristique additionnelle du dispositif de plateau de chargement basculant-coulissant selon l'invention, la rampe se présente sous la forme d'un cadre dont les deux longerons qui comportent les gorges consistent en des profilés en acier.

La présente invention a également pour objet un véhicule de dépannage qui se **caractérise en ce qu**'il comporte un plateau de chargement basculant-coulissant tel que décrit précédemment.

Les avantages et les caractéristiques du dispositif de plateau de chargement basculant-coulissant pour véhicule de dépannage selon l'invention, ressortiront plus clairement de la description qui suit et qui se rapporte au dessin annexé, lequel en représente un mode de réalisation non limitatif.

Dans le dessin annexé :
- les figures 1, 2, 3 et 4 représentent chacune une vue schématique partielle de profil d'une partie d'un véhicule de dépannage équipé d'un dispositif de plateau de chargement basculant-coulissant selon l'invention, dans des phases différentes d'utilisation.
- la figure 5 représente une vue schématique partielle en coupe transversale du même dispositif.
- la figure 6 représente une vue schématique partielle en demi coupe transversale du même dispositif.

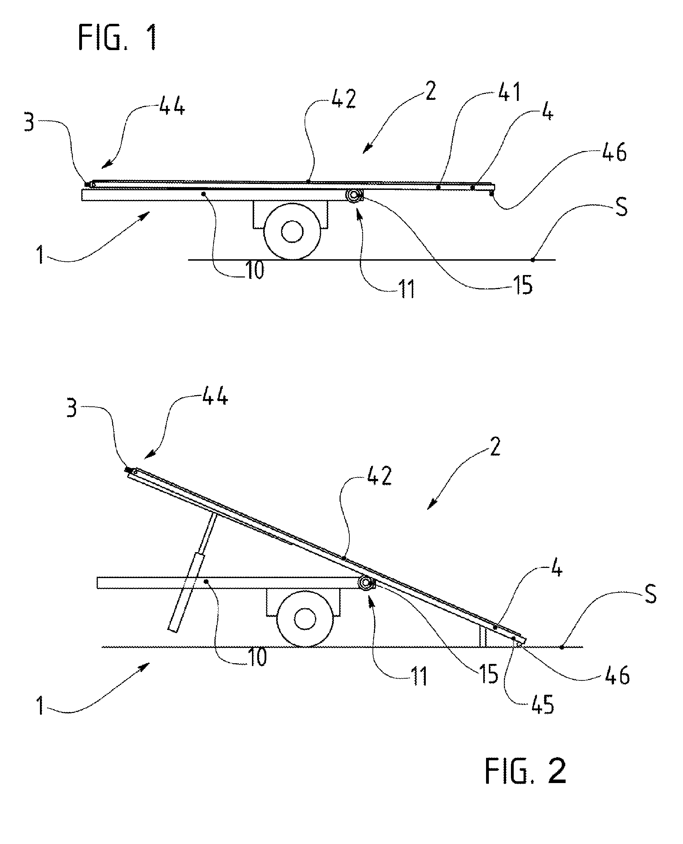

En référence à la figure 1, on peut voir une partie d'un véhicule de dépannage 1, et plus particulièrement une partie de son châssis 10, auquel est assujetti un dispositif 2 de plateau de chargement basculant-coulissant selon l'invention.

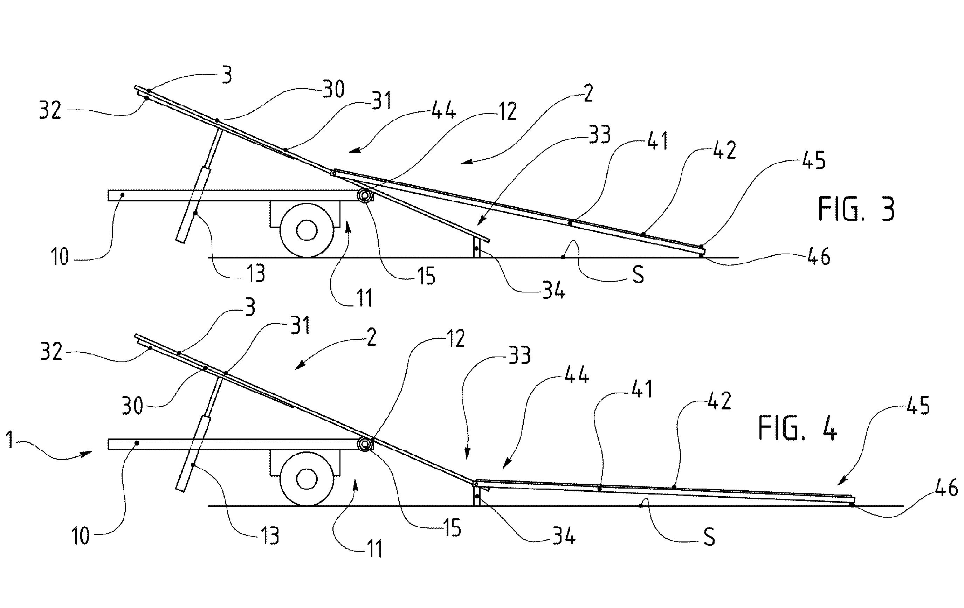

Comme on peut le voir de manière plus précise sur les figures 3 à 5, le dispositif 2 de plateau de chargement basculant-coulissant selon l'invention comprend une rampe 3 et un plateau 4.

La rampe 3 se présente sous la forme d'un cadre comprenant deux longerons longitudinaux 30 de section transversale de forme spécifique en sorte que chacun comporte une gorge 31 en forme de U ouvrant latéralement vers l'extérieur. Cette rampe 3 est montée pivotante sur le châssis 10, au niveau de l'extrémité arrière 11 de celui-ci, selon un axe transversal 12, pour pouvoir basculer sous l'action d'un vérin hydraulique 13 solidaire du châssis 10.

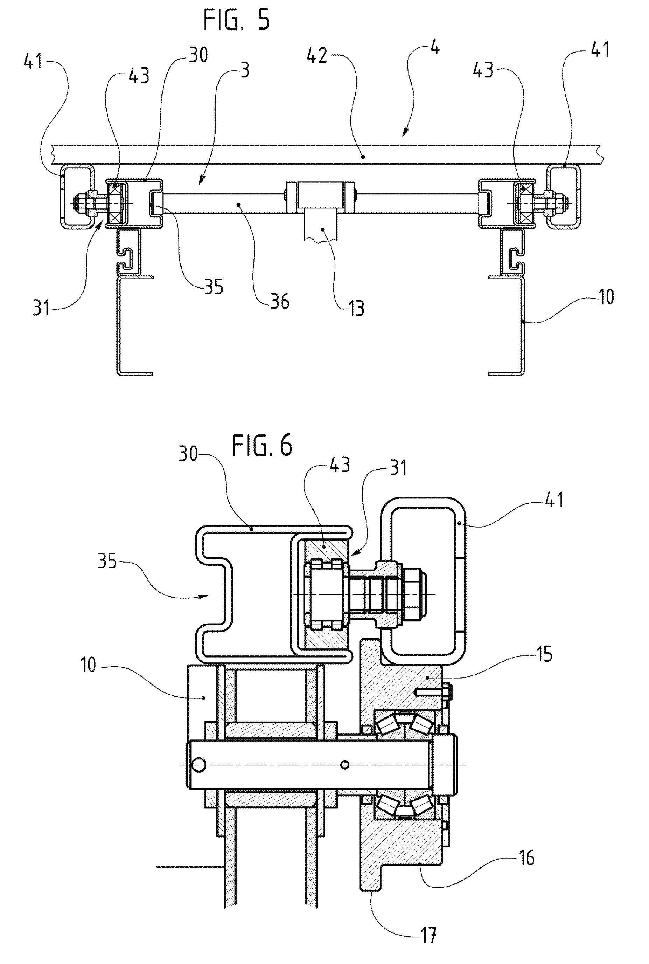

Le plateau 4 comprend, dans le mode de réalisation représenté, un cadre périphérique, dont sont visibles sur la figure 5 les poutres longitudinales 41, surmonté d'un plancher 42.

Le plateau 4 est lié d'une part à la rampe 3 et d'autre part au châssis 10. La liaison avec la rampe 3 est réalisée par l'intermédiaire de deux galets 43, visibles sur la figure 5, montés fous sur les poutres longitudinales 41 du cadre 40, au niveau de la partie avant 44 du plateau 4, et faisant saillie vers l'intérieur du cadre 40 en sorte d'être engagés chacun dans une gorge 31 de la rampe 3. Les galets 43 sont prévus aptes à se déplacer dans les gorges 31, en sorte de permettre le coulissement du plateau 4 sur la rampe, ce qui est réalisé sous l'effet d'un système à vérin, dont seule le vérin 32 est visible sur les figures 3 et 4, de conception de préférence telle que décrite dans le document FR 2 852 374.

Ce système à vérin est du type comprenant un vérin double effet 32 dont la tige comprend à son extrémité des poulies montées sur un arbre disposé transversalement sur lesquelles passent de manière symétrique au moins deux chaînes, l'une d'extension et l'autre de rappel, celles-ci étant solidarisées par une extrémité à la rampe 3 et par l'autre au plateau 4 en sorte que la sortie de la tige entraîne le déplacement du plateau 4 dans le même sens par l'intermédiaire de la chaîne d'extension, et entraîne également la chaîne de rappel, tandis que la rentrée de la tige entraîne le déplacement du plateau 4 dans le sens inverse par l'intermédiaire de la chaîne de rappel et entraîne également la chaîne d'extension.

La liaison de la rampe 3 avec le châssis 10 n'est réalisée qu'en appui, ce dernier comportant dans sa partie arrière 14, deux rouleaux 15, disposés de part et d'autre, et sur la bande roulement 16 desquels reposent les poutres longitudinales 41 du cadre 40, tandis que des boudins de guidage 17 assurent le maintien transversal du plateau 4, comme cela est visible sur la figure 6.

Sur la figure 1 on peut voir qu'en position de route, la rampe 3 est positionnée horizontalement sur le châssis 10, de même que le plateau 4, qui est maintenu à l'avant par sa liaison avec la rampe 3 au travers des galets 43, et à l'arrière en reposant sur les rouleaux 15.

En référence à la figure 3, on peut voir que l'actionnement en extension du vérin 13 provoque le basculement de la rampe 3 qui pivote selon l'axe 12, jusqu'à prendre une position inclinée qui amène son extrémité arrière 33 à proximité du sol S. On notera que l'extrémité arrière 33 de la rampe 3 est munie d'un dispositif 34 de type béquille, lui permettant de prendre appui sur le sol S.

On peut voir également que l'actionnement du système à vérin 32 provoque le coulissement des galets 43 dans les gorges 31 du plateau 4 et donc le déplacement du plateau 4 le long de la rampe 3, jusqu'à ce que l'extrémité arrière 45 du plateau 4, qui est munie inférieurement d'un moyen de roulement 46, vienne au contact du sol S.

A ce sujet on peut voir sur la figure 2 une position particulière où la rampe 3 est en position basculée alors que le plateau 4 n'a pas coulissé, en sorte que le moyen de roulement 46 vienne au contact du sol S. On comprendra que la suite de l'opération consiste à faire coulisser le plateau 4 sur la rampe pour atteindre les phases reproduites sur les figures 3 et 4.

On notera que dans une telle position, un dispositif tel que celui décrit dans le document US 6 413 033 se trouverait situation de blocage, et que pour pouvoir faire coulisser le plateau il serait nécessaire d'abaisser la rampe, et que pour conserver un appui au sol pendant ce coulissement il faudrait parfaitement coordonner le coulissement du plateau à l'inclinaison de la rampe.

Sur la figure 4, on peut voir que le prolongement du mouvement de coulissement amène l'extrémité avant 44 du plateau 4 à proximité de l'extrémité arrière 33 de la rampe 3, en sorte que l'angle que forme le plateau 4 et le sol S soit réduit.

On peut constater que les galets 43, en coopération avec les gorges 31, assurent non seulement le coulissement du plateau 4 sur le châssis 10,au travers de la rampe 3, mais également le pivotement du plateau 4 par rapport à la rampe 3.

Du point de vue construction, on notera que les longerons 31 de la rampe 3 consistent, de manière avantageuse, chacun en un profilé en acier, tandis que les galets 43 sont en acier protégé contre la corrosion.

On notera également que les longerons 31 comportent chacun, du côté intérieur, une gorge en U 35 destinée à permettre la solidarisation de traverse, et notamment d'une traverse 36, visible sur la figure 5, à laquelle est transmis l'effort fourni par le vérin 13.

Le dispositif de plateau de chargement basculant-coulissant selon l'invention présente, par rapport aux dispositifs similaires existants, non seulement des avantages économiques du point de vue fabrication, mais également du point de vue mise en oeuvre et entretien.

A titre d'exemple non limitatif, là où un dispositif de plateau de chargement basculant-coulissant tel que décrit dans le document FR 2 852 374 nécessitait un vérin 32 de 250 bars pour tirer 6,5 tonnes, le dispositif selon l'invention permet de tirer 8,8 tonnes avec un vérin de 180 bars.

Les caractéristiques du dispositif selon l'invention permettent ainsi l'utilisation d'un vérin 32 de puissance moindre et donc d'un poids réduit, ce qui génère également des économie d'énergie.

## Revendications

1. Dispositif de plateau de chargement basculant-coulissant (2) pour véhicule de dépannage (1) du type comportant un châssis (10) équipé d'un plateau (4) apte à coulisser et à basculer pour prendre des positions successives entre deux positions extrêmes, l'une déployée et abaissée au sol (S) permettant de procéder au chargement d'un objet ou d'un véhicule immobilisé, et l'autre relevée par rapport audit châssis (10) pour le transport, ledit plateau (4) étant à cet effet monté mobile en translation longitudinale sur une rampe (3) elle-même montée pivotante sur ledit châssis (10) en sorte de pouvoir basculer puis amener au sol par coulissement, l'extrémité du côté arrière (45) dudit plateau (4), tandis que son extrémité du côté avant (44) est apte à pouvoir pivoter sur ladite rampe (3) selon un axe transversal en sorte de réduire l'angle que fait ledit plateau (4) avec le sol (S), ledit dispositif (2) se **caractérise en ce que** la rampe (3) comprend deux longerons parallèles (30) consistant chacun en un profilé présentant une section en U dont la gorge (31) s'ouvre latéralement vers l'extérieur, tandis que ledit plateau (4) comporte deux galets (43) de même axe horizontal, engagés chacun dans la gorge (31) d'un profilé (30), en sorte de constituer la liaison en pivotement et en coulissement dudit plateau (4) à ladite rampe (3), et **en ce que** ledit châssis (10) comporte à son extrémité du côté arrière, deux rouleaux (15) disposés de part et d'autre de la rampe (3), sur lesquels vient en appui et peut rouler ledit plateau (4).

2. Dispositif de plateau de chargement basculant-coulissant (2) selon la revendication 1, **caractérisé en ce que** les longerons (30) présentent chacun du côté intérieur une gorge (35) conçue apte à l'assujettissement de traverses (36), consistant notamment en des supports des moyens moteurs (13) du mouvement de coulissement.

3. Dispositif de plateau de chargement basculant-coulissant (2) selon la revendication 1 ou la revendication 2, **caractérisé en ce que** la rampe (3) se présente sous la forme d'un cadre dont les deux longerons (30) qui comportent les gorges (31) consistent en des profilés en acier.

4. Véhicule de dépannage (1) **caractérisé en ce qu'**il comporte un dispositif de plateau de chargement basculant-coulissant (2) selon l'une quelconque des revendications précédentes.
